# EUROPEAN PATENT APPLICATION

(11) **EP 2 017 787 A2**
(43) Date of publication of application: **21.01.2009**
(21) Application number: 08160160.1
(22) Date of filing: 11.07.2008
(51) Int. Cl.: G06T 7/00, G06T 5/00, A61B 5/00

(54) **System and method for segmenting structures in a series of images**

(30) Priority: 18.07.2007 US 826776
(71) Applicant: Innovea Medical Ltd., 52511 Ramat Gan (IL)
(72) Inventor: Mashiach, Adi, 64074, Tel Aviv (IL)
(74) Representative: Pawlowski, Adam

(57) **Abstract**

A method and system of imaging living tissue that includes identifying a structure from a first frame segment and using image data correlated to the structure in processing a second frame segment.

## Description

### RELATED APPLICATIONS

The present application is a continuation in part of US Patent application 11/328,217 filed January 10, 2006. The disclosures of all these applications, including all appendixes thereof, are incorporated herein by reference.

### BACKGROUND

Capturing images of internal areas, structures or organs of a body or a body part may include administering contrast material to for example highlight the areas or organs being imaged. When imaging for example blood vessels, a contrast material may be injected into the circulatory system so that the shape, path or outline of a vessel being imaged is highlighted in an image. Contrast material may also be administered when imaging for example an alimentary canal, excretory organs, tubular organs or any other organs.

Tubular organs such as vessels may be partially or completely clogged or blocked, and such a clog or block may prevent or impair a contrast material from reaching the area of the organ or vessel to be imaged. Similarly, a partially clogged tube or vessel filled with contrast material may be displayed in an image as narrower than the actual vessel on account for example of a build-up of blockage materials in a wall of the vessel.

Also, other organs (such as kidneys, liver, brain, thyroid and others) receive blood flow. Contrast material may be absorbed by the organ or portions of the organ in relation to blood flow to the organ, or part of the organ. Unexpectedly high concentration of contrast material may indicate an abundance of blood vessels, such as occurs in relation to some tumors. Unexpectedly low contrast material concentrations may indicate an organ or a portion of an organ that is not receiving appropriate blood flow. This may be especially apparent with paired organs (such as for example, lungs, kidneys) and symmetric organs (such as brain) where comparison may more clearly distinguish differences. Such low blood follow may also establish a baseline such as no-flow or complete blockage of a blood vessel, providing an additional medically significant indicator.

However, there is a known risk associated with contrast material. Some subjects may experience severe and potentially life threatening reactions, such as for example allergic reactions to the contrast material. In addition, the contrast material may also induce organ damage, such as for example damage to the kidneys of a subject, in particular with subjects that have a preexisting renal insufficiency, preexisting diabetes or reduced intravascular volume. Also, contrast material is expensive, thus reduction or non-use of contrast material is desirable, and such reduction of quantity or non-use is facilitated, as described herein.

### SUMMARY

According to some embodiments, there is provided a method of imaging living tissue that includes identifying a structure from a first frame segment, using image data correlated to the structure in processing a second frame segment, and processing the image data to enhance image quality such that image with an attenuation value below a threshold value may result in recognizable images.

According to some embodiments, the attenuation value in the method of imaging living tissue may be measured in Hounsfield units (HU). The threshold value may be lower than about 200 HU. The threshold value may be lower than about 150 HU. The threshold value may be lower than about 100 HU. The threshold value may be lower than about 50 HU. The threshold value may be lower than about 40 HU.

According to some embodiments, the method of imaging living tissue may further include administration of contrast material. The contrast material may include Iodine, radioactive isotope of Iodine, Gadolinium, micro-bubbles agent, or any combination thereof. The contrast material may be administered by injection.

According to some embodiments, the method of imaging living tissue may further include, administration of contrast material at administration rate of about 0.05ml-2ml/sec. The method of imaging living tissue may further include, administration of contrast material at administration rate of about 0.05ml-1ml/sec. The method of imaging living tissue may further include, administration of contrast material at administration rate of about 0.05ml-0.5ml/sec. The method of imaging living tissue may further include, administration of contrast material at administration rate of about 0.05ml-0.25ml/sec. The method of imaging living tissue may further include, administration of contrast material at administration rate of about 0.05ml-0.1ml/sec.

According to some embodiments, the method of imaging living tissue may further include administration of contrast material at a volume of about 0.1-60 ml. The method of imaging living tissue may further include administration of contrast material at a volume of about 0.1-40 ml. The method of imaging living tissue may further include administration of contrast material at a volume of about 0.1-20 ml. The method of imaging living tissue may further include administration of contrast material at a volume of about 0.1-10 ml. The method of imaging living tissue may further include administration of contrast material at a volume of about 0.1-5 ml. The method of imaging living tissue may further include administration of contrast material at a volume of about 0.1-2 ml.

According to some embodiments, the method of imaging living tissue may further include administration of contrast material at an amount of about 0.1-600 mg. The method of imaging living tissue may further include administration of contrast material at an amount of about 0.1-500 mg. The method of imaging living tissue may further include administration of contrast material at an amount of about 0.1-400 mg. The method of imaging living tissue may further include administration of contrast material at an amount of about 0.1-300 mg. The method of imaging living tissue may further include administration of contrast material at an amount of about 0.1-200 mg. The method of imaging living tissue may further include administration of contrast material at an amount of about 0.1-100 mg. The method of imaging living tissue may further include administration of contrast material at an amount of about 0.1-50 mg. The method of imaging living tissue may further include administration of contrast material at an amount of about 0.1-20 mg. The method of imaging living tissue may further include administration of contrast material at an amount of about 0.1-10 mg. The method of imaging living tissue may further include administration of contrast material at an amount of about 0.1-1 mg.

According to some embodiments, the structure identified in a method of imaging living tissue may include: body, body part, organ, tissue, cell, arrangement of tissues, arrangement of cells, or any combination thereof. The structure may include a blood vessel.

According to some embodiments, the image data in a method of imaging living tissue may include 3D volume data set, form of digital data, location of pixels, coordinates of pixels, distribution of pixels, intensity of pixels, vectors of pixels or any combination thereof.

According to some embodiments, there is provided a system for imaging living tissue that includes, a scanning portion adapted to scan living tissue in frame segments, and an image processing module adapted to identify a structure from a first frame segment and to use image data correlated to the structure in processing a second frame segment, to enhance image quality such that image with an attenuation value below a threshold value result in recognizable image.

According to some embodiments, the attenuation value in he system for imaging living tissue may be measured in Hounsfield units (HU). The threshold value may be lower than about 200 HU. The threshold value may be lower than about 150 HU. The threshold value may be lower than about 100 HU. The threshold value may be lower than about 50 HU. The threshold value may be lower than about 40 HU.

According to some embodiments, the scanning portion of the system for imaging living tissue may include a Computerized Tomography (CT) device.

According to some embodiments, the scanning portion of the system for imaging living tissue may include a Magnetic Resonance Imaging (MRI) device.

According to some embodiments, the scanning portion of the system for imaging living tissue, may include: an Ultrasound (US) Scanner, Computerized Tomography Angiography (CTA) device, Magnetic Resonance Angiograph (MRA) device, Positron Emission Tomography (PET) device, PET/CT device, 2D-Angiography device, 3D-angiography device, X-ray/MRI device.

According to some embodiments, the structure identified in the system for imaging living tissue may include: body, body part, organ, tissue, cell, arrangement of tissues, arrangement of cells, or any combination thereof. The structure may include a blood vessel.

According to some embodiments, the image data used in a system for imaging living tissue may include, 3D volume data set, form of digital data, location of pixels, coordinates of pixels, distribution of pixels, intensity of pixels, vectors of pixels or any combination thereof

According to some embodiments, a boundary of a part of a blood vessel in an image of a series of images, where the series of images is captured by an ex vivo or an internal imager, may be defined. The part of the vessel in the image may be free of contrast material or may have a substantially lower volume or lower concentration or lower amount of contrast material than is customary used. The contrast material used may be administrated at a volume, concentration, amount, administration rate, or any combination thereof, that is lower then that customary used. The contrast material used may include a contrast material that is different then the contrast material that is regularly used, or any combination of contrast materials.

A method of an embodiment of the invention may define a boundary of a part of a blood vessel in an image of a series of images, where the series of images is captured by an ex vivo imager. A method of an embodiment of the invention may include designating a seed area in the image. A method of an embodiment of the invention may include marking an area of the vessel at which to stop a segmentation of the vessel. A method of an embodiment of the invention may include clustering into image intensity ranges, pixels in a portion of the image containing the seed area, where the portion includes less than all of the image. In some embodiments, the image intensity ranges may define non-uniform ranges of image intensity levels. A method of an embodiment of the invention may include clustering image intensity ranges in an image into more than four image intensity ranges.

A method of an embodiment of the invention may include identifying a blood vessel, and comparing a grayscale scoring of an area in an image to a plurality of stored grayscale scores of samples of the blood vessel. A method of an embodiment of the invention may include defining a boundary of a plurality of vessels in an image. A method of an embodiment of the invention may include a first clustering of a first group of pixels in an image into a first set of clusters; and a second clustering of a second group of pixels into a second set of clusters, where the second group of pixels is a subset of the first group of pixels.

A method of an embodiment of the invention may include mapping an isolable contour region of a cluster of pixels, where the pixels in the cluster have a range of image intensity levels, and selecting from among a group of isolable contour regions having pixels in the range of image intensity levels, a region that includes a pixel overlapping a pixel in a seed area. A method of an embodiment of the invention may include recording a coordinate of a pixel within the seed area, recording an image intensity of the pixel; and designating the image within the series of images, and defining a boundary of an area of interest around a seed area around the pixel, where the boundary around the seed area is for example a boundary box or a convex hole.

A method of an embodiment of the invention may include defining a boundary of an outer wall of a blood vessel.

A method of an embodiment of the invention may include selecting a contour level region from among a group of contour level regions, by comparing geometric properties of a contour level region to geometric properties of another of the group of contour level regions. In some embodiments, such comparing may include calculating a difference between an area of a contour level region and an area of another of a group of contour level regions, calculating a distance between a mass center of a contour level region and a mass center of another of the group of contour level regions multiplying the difference between the areas by the distance between the mass centers, and identifying a derivative of a product of such multiplying.

In some embodiments, a method may include comparing geometric properties of an area of pixels in a first contour region with geometric properties of an area of pixels in a second contour region. In some embodiments, a method may include identifying a group of pixels in an area between an outer edge of a first contour level region and an outer edge of a second contour level region, where all pixels in such group are contiguous to at least one other pixel in such group.

In some embodiments a method may include mapping an isolable contour region of a cluster of pixels, where pixels in the cluster have a range of image intensity levels, and selecting from among a group of isolable contour regions having pixels in such range of image intensity levels, a region including a pixel overlapping a pixel in a seed area.

In some embodiments a method may include defining a boundary of a blood vessel in a first image of a series of images of the vessel, and detecting that the boundary of the blood vessel does not appear in a second image of the series of images of the blood vessel. In some embodiments a method may include selecting a third image of the series of images that is between the first image and the second image, and selecting an area of the third image for a clustering of pixels. In some embodiments a method may include watershedding an intensity level of an area of the third image that overlaps a seed point. In some embodiments, selecting the third image may include selecting an image that is a predefined number of images from the second image. In some embodiments the selecting of the third image may include selecting an area as being larger than an area in the third image that was selected in a prior segmentation attempt. In some embodiments, selecting the third image may include selecting the third image at an imaging plane that is different than an imaging plane of the second image.

### BRIEF DESCRIPTION OF THE FIGURES

The subject matter regarded as the invention is particularly pointed out and distinctly claimed in the concluding portion of the specification. The invention, however, both as to organization and method of operation, together with features and advantages thereof, may best be understood by reference to the following detailed description when read with the accompanied drawings in which:
Fig. 1 is a schematic diagram of an image processing device and system, in accordance with an embodiment of the invention;
Fig. 1A a schematic diagram of an image processing device and system, according to some embodiments;
Fig. 2 is a depiction of a series of images of a body part captured by an ex vivo imager, in accordance with an embodiment of the invention;
Fig. 3 is a schematic depiction of a segmented vessel, in accordance with an embodiment of the invention;
Fig. 4 is a flow diagram of a method, in accordance with an embodiment of the invention;
Fig. 4A-I is a flow diagram of a method, in accordance with an embodiment of the invention;
Figs. 5A and 5B are depictions of isolable contour level regions in an embodiment of the invention;
Fig. 5C is a depiction of neighborhoods of pixels in areas between edges of isolable contour regions in an embodiment of the invention;
Fig. 5D is a flow diagram of a method of clustering pixels into ranges of intensity levels and mapping contour levels of the clustered pixels to segment a body part in an image, in accordance with an embodiment of the invention; and
Fig. 6, a flow diagram of a method of processing imaging data into segmented data.

It will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DETAILED DESCRIPTION OF THE INVENTION

In the following description, various embodiments of the invention will be described. For purposes of explanation, specific examples are set forth in order to provide a thorough understanding of at least one embodiment of the invention. However, it will also be apparent to one skilled in the art that other embodiments of the invention are not limited to the examples described herein. Furthermore, well-known features may be omitted or simplified in order not to obscure embodiments of the invention described herein.

Unless specifically stated otherwise, as apparent from the following discussions, it is appreciated that throughout the specification, discussions utilizing terms such as "selecting," "processing," "computing," "calculating," "determining," or the like, may refer to the actions and/or processes of a computer, computer processor or computing system, or similar electronic computing device, that may manipulate and/or transform data represented as physical, such as electronic, quantities within the computing system's registers and/or memories into other data similarly represented as physical quantities within the computing system's memories, registers or other such information storage, transmission or display devices. In some embodiments processing, computing, calculating, determining, and other data manipulations may be performed by one or more processors that may in some embodiments be linked.

In some embodiments, the term 'free of contrast material' or 'not highlighted by contrast material' may, in addition to the regular understanding of such term, mean having contrast material in quantities that are insufficient to provide a clear or visibly distinct definition of the boundaries of the lumen of a vessel wherein such contrast material may be found. In some embodiments, the term 'free of contrast material' may mean that a contrast material was not administered. According to some embodiments, the term "free of contrast material" may also mean no contrast material, lower amounts than normal of contrast material, lower concentration than normal of contrast material, a mixture of varying amounts of various contrast materials, trace amounts of contrast material, various kinds of contrast materials, that may be different than the regularly used contrast material.

As referred to herein, the terms "image processing device", "electrical image processing device", "image processor", "and electric image processing device and system", "data processing unit", "image processing module" may interchangeably be used.

As referred to herein, the terms "diagnostic imager", "diagnostic imaging device", "diagnostic scanner", "scanner", "scanning portion" may interchangeably be used.

As referred to herein, the term "image" may also include part of an image, section of an image, pattern displayed in an image, structure displayed in an image.

As referred to herein, "enhancing an image" and "enhancing image quality", may include improving an image resolution, improving image intensity, improving image contrast, improving attenuation of an image, improving distinguishing of and between details in an image, increasing clarity in an image, increasing discernment in an image, increasing the ability to detect and/or define recognizable patterns in an image, increasing the ability to detect and/or define recognizable structures in an image. According to some embodiments, enhancing an image quality may result in increasing diagnostic and/or clinical value of the image.

As referred to herein, the terms attenuation, attenuation value, pixel value(s), intensity, intensity value, may be interchangeably be used. According to some embodiments, attenuation, attenuation value, pixel value(s), intensity and intensity value may be measured by Hounsfield Units (HU).

As referred to herein, the terms "otherwise poorly recognizable images", "images that were otherwise poorly recognizable", may include images or parts of images whose details are not clear, distinguishable, distinct, resolved or any combination thereof. The terms "otherwise poorly recognizable images", "images that were otherwise poorly recognizable", may further include images or parts of images, that include patterns, structures, and the like which are not clear, distinguishable, distinct, resolved or any combination thereof. The terms "otherwise poorly recognizable images", "images that were otherwise poorly recognizable", may further include no recognizable images or parts of images. The terms "otherwise poorly recognizable images", "images that were otherwise poorly recognizable", may further include images or parts of images with non recognizable patterns, structures, and the like.

According to some embodiments, the term "frame" may include an image or any portion of an image. The term "frame" may further include a single image or portion of an image in a series of consecutive images or portion of images. A "frame segment" may include any portion of a frame. A frame may be acquired, by, for example, but not limited to, a sensor, a sensor array and the like.

According to some embodiments, the term "structure" may include any a body or any part of a body. The term "structure" may further include any internal or external body parts, such as, for example, but not limited to, limbs, tissues, organs, cells, and the like. The term "structure" may further include any arrangement or formation of tissues, organs, or other parts of an organism, such as for example, but not limited to blood vessels.

The processes and functions presented herein are not inherently related to any particular computer, imager, network or other apparatus. Embodiments of the invention described herein are not described with reference to any particular programming language, machine code, etc. It will be appreciated that a variety of programming languages, network systems, protocols or hardware configurations may be used to implement the teachings of the embodiments of the invention as described herein.

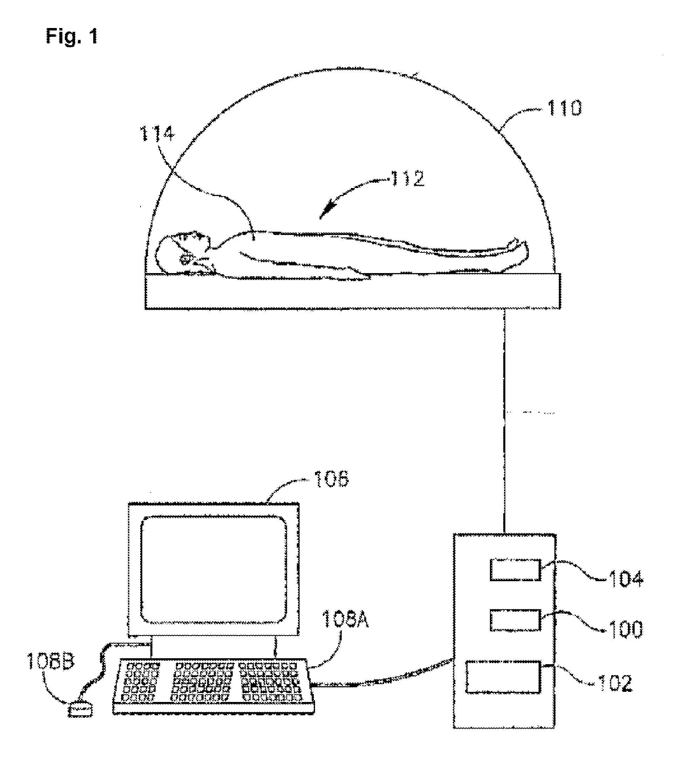

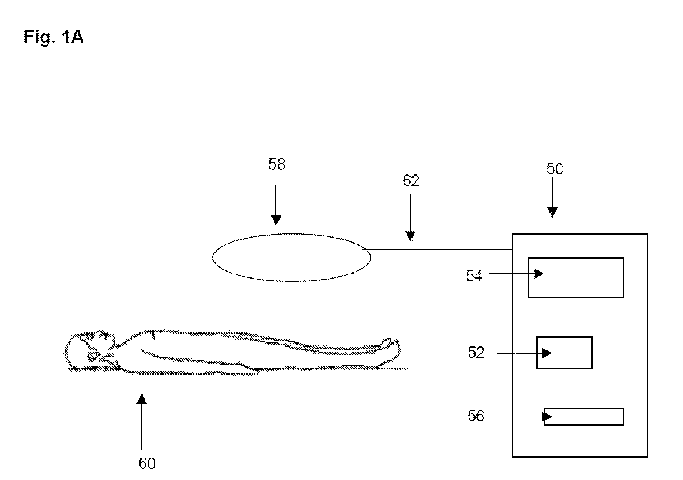

Reference is made to Fig. 1, a schematic diagram of an image processing device and system, in accordance with an embodiment of the invention. An image processing device in accordance with an embodiment of the invention may be or include a processor 100 such as for example a central processing unit. The image processing device may include or be connected to a memory unit 102 such as a hard drive, random access memory, read only memory or other mass data storage unit. In some embodiments, processor 100 may include or be connected to a magnetic disk drive 104 such as may be used with a floppy disc, disc on key or other storage device. The image processor may include or be connected to one or more displays 106 and to an input device 108 such as for example a key board 108A, a mouse, or other pointing device 108B or input device by which for example, a user may indicate to a processor 100 a selection or area that may be shown on a display. In some embodiments, processor 100 may be adapted to execute a computer program or other instructions so as to perform a method in accordance with embodiments of the invention.

The processor 100 may be connected to an external or ex vivo diagnostic imager 110, such as for example a computerized tomography (CT) device, magnetic resonance (MR) device, ultrasound scanner, CT Angiography, magnetic resonance angiograph, positron emission tomography or other imagers 110. In some embodiments, imager 110 may capture one or more images of a body 112 or body part such as for example a blood vessel 114, a tree of blood vessels, alimentary canal, urinary tract, reproductive tract, or other tubular vessels or receptacles. In some embodiments imager 110 or processor 100 may combine one or more images or series of images to create a 3D image or volumetric data set of an area of interest of a body or body part such as for example a blood vessel 114. In some embodiments, a body part may include a urinary tract, a reproductive tract, a bile duct, nerve or other tubular part or organ that may for example normally be filled or contain a body fluid. In some embodiments, imager 110 and / or processor 100 may be connected to a display 106 such as a monitor, screen, or projector upon which one or more images may be displayed or viewed by a user.

According to further embodiments, and as described by way of example in Fig. 1A, there is provided an electrical image processing device and system. The electrical image processing device (50) may include at least one processor (52), one or more displays (54) and at least one input device (56), that may form an integral, independent unit. The electrical image processing device (50) may be adapted to execute a computer program and/or algorithm and/or other instructions so as to perform a method in accordance with some embodiments. The image processing device may further be adapted to use any hardware and/or firmware. The electrical image processing device may be further connected physically and/or functionally to a diagnostic imager, such as diagnostic imager 58 in Fig. 1A. The diagnostic imager may include an external diagnostic imager, an ex vivo diagnostic imager, or an internal diagnostic imager. An internal diagnostic imager may include, for example, an imager which may include an internal source and an external scanner and/or an imager which includes an internal source and internal scanner. The connection between the electrical image processing device and the diagnostic imager may be permanent, so as the electrical image processing device and the diagnostic imager form one integral unit; the connection between the electrical image processing device and the diagnostic imager may be transient. The connection between the electrical image processing device and the diagnostic imager may be achieved by various ways, such as for example, by direct interaction; by mediators such as by use of wires, cables (such as for example, mediator 62 in Fig. 1A) and the like; indirectly, such as for example by use of any form removable/portable storage media; by wireless ways, such as for example by wireless communication route; or any combination thereof The connection between the electrical image processing device and the diagnostic imager may be used for the transfer of various kinds of information between the devices. Transfer of various kinds of information between the devices by any connection route mentioned above herein may be performed instantaneously, in real time, or may be performed in delay. Likewise, operations performed by the image processing device on, for example, information transferred from the diagnostic imager, may be performed instantaneously in real time; may be performed in a delay that may be a short delay, such as for example in the range of 1-60 minutes, or in longer delay times, such as for example in the range of more than 60 minutes and; may be performed off line, wherein the diagnostic imager is not necessarily in operative mode. Determination of the occasion at which operations are to be performed by the image processing device on, for example, information transferred from the diagnostic imager, may be done by a user of the image processor device and/or the diagnostic imager.

According to some embodiments, the diagnostic imager (56) that may be connected to the electrical image processing device may include various kinds of diagnostic imagers, such as for example, but not limited to, Computerized Tomography (CT) device, Magnetic Resonance (MR) device, Ultrasound (US) Scanner, Computerized Tomography Angiography (CTA), Magnetic Resonance Angiograph (MRA), Positron Emission Tomography (PET), PET/CT, 2D-Angiography, 3D-angiography, X-ray/MRI devices, and the like. The diagnostic imager device may be used to obtain and/or capture one or more images of, for example, a subject body (such as subject 60 in Fig. 1A) that may include, for example: part of a body, such as a limb; organ(s), such as internal organs, paired organs, symmetric organs; tissue(s), such as a soft tissue, hard tissue; cells; body vessels, such as blood vessel, a tree of blood vessels, alimentary canal, urinary tract, reproductive tract, tubular vessels, receptacles and the like, and any combination thereof. The electrical image processor may combine, in accordance with some embodiments, one or more images or series of images obtained by the diagnostic imager to create 2D and/or 3D image or volumetric data set of an area of interest of a subject body, as detailed above herein. Images thus obtained may be displayed upon the at least one display (such as display 54) of the electrical image processing device (50) or may be transferred to a remote location to be displayed at the remote location. Transferring information to a remote location may include any way of transferring information, such as for example, disk on key, portable hard drive, disk, or any other applicable storage device, as well as wireless communication route. The images may be viewed and optionally further analyzed by a user, such as for example, a health care provider (that may include, among others, health care professional such as a physician, nurse, health care technician, and the like), at any time point after obtaining the images and at any location that harbors the appropriate means to display and (optionally) analyze the images.

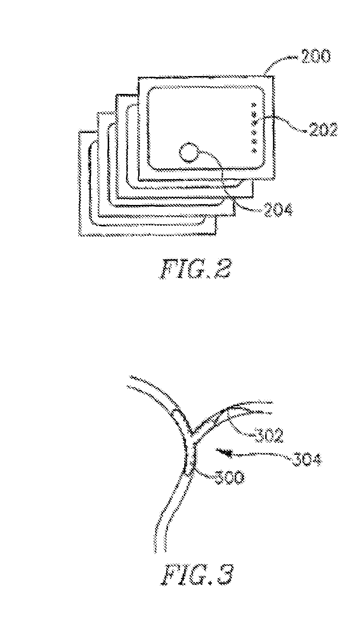

Reference is made to Fig. 2, which illustrates a depiction of a series of images in accordance with an embodiment of the invention. In some embodiments, a series of images 200 may be arranged for example in an order that may, when such images 200 are stacked, joined or fused by for example a processor, create a three dimensional view of a body part such as a blood vessel 114, or provide volumetric data on a body part or structure. In some embodiments images 200 in a series of images may be numbered sequentially or otherwise ordered in a defined sequence. In some embodiments, images 200 may include an arrangement, matrix or collection of pixels 202, voxels or other atomistic units that may, when combined create an image. In some embodiments, pixels 202 may exhibit, characterize, display or manifest an image intensity of the body part appearing in the area of the image 200 corresponding to the pixel 202. In some embodiments, an image intensity of a pixel 202 may be measured in Hounsfield units (HU) or in other units.

In some embodiments, a location of a pixel 202 in an image 200 may be expressed as a function of coordinates of the position of the pixel on a horizontal (x) and / or vertical (y) axis. Other expressions of location, intensity and characteristics may be used.

In some embodiments, a user of an image processing device or system may view an image 200 on for example display 106, and may point to or otherwise designate an area of the image 200 as for example a seed area 204. In some embodiments, a seed area 204 may be or include a location within an image 200 of a body part such as for example a vessel 114 or other structure or organ in a body. In some embodiments, a seed area 204 may include one or more pixels and a description of, or data about, a body part or organ that may appear in an image or series of images, such as the image intensity of pixels 202 in such seed area 204.

Reference is made to Fig. 3, a schematic depiction of a vessel 304 segmented from surrounding structures, in accordance with an embodiment of the invention. In some embodiments, a contrast material 300 such as UltaVist 370mg % Iodine or other suitable contrast materials as may be used for highlighting vessels may be administered by way of for example ingestion, injection or otherwise into a body part such as vessel 304. In some embodiments, a calcified substance on an area of a vessel or vessel wall may be highlighted in an image. Contrast material 300 may highlight vessel 304 as vessel 304 appears in an image 200 or series of images. In some embodiments, no contrast material 300 may be introduced into the vessel. In some embodiments, a lesion, atheromatous, plaque or thrombi or other material that may for example adhere to or be part of the wall of a vessel 304 or to for example a wall of an organ or vessel 304, may create a blockage 302 of vessel 304, and may stop, limit or impair contrast material 300 from reaching a part of a vessel 304, such as a part of vessel 304 that is anatomically or circulatory distal from the point of introduction of the contrast material 300 to vessel 304.

According to some embodiments, contrast material, such as contrast material 300, may be used for highlighting subject body or at least part of a body, such as for example a limb; organ(s), such as internal organs, paired organs, symmetrical organs, individual organs; tissue(s), such as a soft tissue, hard tissue; cells; body vessels, such as blood vessel, a tree of blood vessels, alimentary canal, urinary tract, reproductive tract, tubular vessels, receptacles and the like, or any combination thereof The contrast material may include any suitable contrast material or a combination of contrast material with other substances and agents such as, for example, additional contrast material, carriers, buffers, saline, diluents, solvents, body fluids and the like. Suitable contrast materials may include such materials as, but not limited to: Iodine, isotopic forms of Iodine, such as radioactive Iodine, Gadolinium, Gadolinium Chelates, micro-bubbles agent or any other suitable material that may be used as contrast material. The contrast material may be administered to the subject body, or part of a body, as detailed above herein, by various ways, such as for example by inhalation, by ingestion, by injection, by rectal insertion or any other appropriate route of administration and any combination thereof Contrast material may be secludedly administered. Contrast material may be administered, for example, in the form of a bolus wherein the contrast material may be mixed, prior to administration with a fluid. For example, the bolus may include a contrast material and saline. For example, the bolus may include a contrast material and blood sample. In addition, after administration of the bolus, a saline push may be administrated. Saline push may include an additional administration of saline, (for example, in a volume of 20-50 ml) that may be administered in a short time (such as between 1 to 60 seconds) after administration of the bolus containing the tracing material. Administration of the contrast material to the subject may allow a spatially and/or temporally tracing of the contrast material in the subject, which may be used in a method according to some embodiments. Tracing the contrast material may be performed at various spatial (locations/regions) and temporal (time points) distributions. For example, tracing contrast material may be performed in a region that is located at a spatial and/or temporal region that is beforehand the bolus. This may mean that the bolus has not yet reached the location of the tracing region. For example, tracing contrast material may be performed in a region that is located at a spatial and/or temporal region that is correlated with the location of the bolus. For example, tracing contrast material may be performed in a region that is located at a spatial and/or temporal region that is afterhand the bolus. This may mean that the bolus has already reached and passed the location of the tracing region. Tracing the contrast material may include tracing high amount/concentration of contrast material. High amount/concentration of contrast material may include for example, about 75%-100% of the amount of contrast material administered. Tracing the contrast material may include tracing average amount/concentration of contrast material. Average amount/concentration of contrast material may include, for example, about 50%-75% of the amount of contrast material administered. Tracing the contrast material may include tracing low amount/concentration of contrast material. Low amount/concentration of contrast material may include, for example, about 25%-50% of the amount of contrast material administered. Tracing the contrast material may include tracing trace amount/concentration of contrast material. Trace amount/concentration of contrast material may include, for example, about 0.000001% - 25% of the amount of contrast material administered. Preferably, trace amounts may include about .000001% - 15% of the amount of contrast material administered. Preferably, trace amounts may include about .000001 % - 10% of the amount of contrast material administered. More preferably, trace amounts may include about .000001% - 5% of the amount of contrast material administered. More preferably, trace amounts may include about .000001% - 2.5% of the amount of contrast material administered. Even more preferably, trace amounts may include about .000001% - 1% of the amount of contrast material administered. Even more preferably, trace amounts may include about .000001% - 0.05% of the amount of contrast material administered. Even more preferably, trace amounts may include about .000001% - 0.01% of the amount of contrast material administered. Even more preferably, trace amounts may include about .000001% - 0.005% of the amount of contrast material administered. Even more preferably, trace amounts may include about .000001% - 0.0005% of the amount of contrast material administered. Tracing the contrast material may further include tracing absence of contrast material (0%).

As mentioned above herein, contrast material administered may sometimes result in adverse effect on subjects to which the contrast material was administered. Some subjects may experience severe and potentially life threatening reactions, such as for example allergic reactions to the contrast material. In addition, the contrast material may also induce organ damage, such as for example damage to the kidneys of a user, in particular with users that have a preexisting renal insufficiency, preexisting diabetes or reduced intravascular volume. In addition, the contrast material is economically expensive. There is thus a need to lower the amount/concentration of the contrast material used.

According to some embodiments, the contrast material administered to a subject, such as for example in the form of a bolus, may include lower percentage of contrast material than are routinely used. For example, according to some embodiments, the bolus injected to a subject may include 0.1%-50% of contrast material. The contrast material administered to a subject, such as for example in the form of a bolus, may include 0.1%-40% of contrast material. Preferably, the contrast material administered to a subject, such as for example in the form of a bolus, may include 0.1%-25% of contrast material. Even more preferably, the contrast material administered to a subject, such as for example in the form of a bolus, may include 0.1%-10% of contrast material. Even more preferably, contrast material administered to a subject, such as for example in the form of a bolus, may include 0.1%-5% of contrast material. Even more preferably, contrast material administered to a subject, such as for example in the form of a bolus, may include 0.1%-2% of contrast material.

According to some embodiments, the contrast material administered to a subject, such as for example in the form of a bolus, may include lower volume of contrast material. For example, volume of contrast material, that is routinely used, is at a range of about 80-150 ml. As a non-limiting example, an Iodine containing contrast material, such as UltaVist (at a concentration of 370 mg/dl) may be used. As another, non-limiting example, Gadolinium containing contrast material may be used. According to some embodiments, volume of contrast material that may be used in a method according to some embodiments may include about 0.1-60 ml. Preferably, volume of contrast material at the above mentioned concentration that may be used in a method according to some embodiments may include about 0.1-40 ml. More preferably, volume of contrast material at the above mentioned concentration that may be used in a method according to some embodiments may include about 0.1-20 ml. Even more preferably, volume of contrast material at the above mentioned concentration that may be used in a method according to some embodiments may include about 0.1-10 ml. Even more preferably, volume of contrast material at the above mentioned concentration that may be used in a method according to some embodiments may include about 0.1-5 ml. Even more preferably, volume of contrast material at the above mentioned concentration that may be used in a method according to some embodiments may include about 0.1-2 ml.

According to some embodiments, the contrast material administered to a subject, such as for example in the form of a bolus, may include lower amounts of contrast material. For example, amount of contrast material, such as UltaVist that is routinely used, is at a range of about 290-600 mg. According to some embodiments, amount of contrast material that may be used in a method according to some embodiments may include about 0.1-500 mg. According to some embodiments, amount of contrast material that may be used in a method according to some embodiments may include about 0.1-400 mg. Preferably, amount of contrast material that may be used in a method according to some embodiments may include about 0.1-300 mg. More preferably, amount of contrast material that may be used in a method according to some embodiments may include about 0.1-200 mg. Even more preferably, amount of contrast material that may be used in a method according to some embodiments may include about 0.1-100 mg. Even more preferably, amount of contrast material that may be used in a method according to some embodiments may include about 0.1-50 mg. Even more preferably, amount of contrast material that may be used in a method according to some embodiments may include about 0.1-20 mg. Even more preferably, amount of contrast material that may be used in a method according to some embodiments may include about 0.1-10 mg. Even more preferably, amount of contrast material that may be used in a method according to some embodiments may include about 0.1-1 mg.

Reducing flow rate of contrast material after administration may be used in a system and method according to some embodiments. Lowering flow rate of contrast material after administration may be as a result of, for example, reduced heart output, reduced blood flow, reduced administration rate, and any combination thereof.

According to some embodiments, the contrast material administered to a subject, such as for example in the form of a bolus, may include lower administration rate of contrast material. For example, administration rate, for example by injection, of contrast material, such as UltaVist that is routinely used, is at a range of about 2-5 ml/second. According to some embodiments, administration rate of contrast material that may be used in a method according to some embodiments may include an administration rate of about 0.05ml-2ml/sec. Preferably, administration rate of contrast material that may be used in a method according to some embodiments may include an administration rate of about 0.05ml-1.5 ml/sec. More preferably, administration rate of contrast material that may be used in a method according to some embodiments may include an administration rate of about 0.05ml-1 ml/sec. Even more preferably, administration rate of contrast material that may be used in a method according to some embodiments may include an administration rate of about 0.05ml-0.75ml/sec. Even more preferably, administration rate of contrast material that may be used in a method according to some embodiments may include an administration rate of about 0.05ml.-0.5 ml/sec. Even more preferably, administration rate of contrast material that may be used in a method according to some embodiments may include an administration rate of about 0.05ml-0.25 ml/sec. Even more preferably, administration rate of contrast material that may be used in a method according to some embodiments may include an administration rate of about 0.05ml-0.1 ml/sec.

According to some embodiments, the contrast material administered to a subject, may include a Gadolinium containing contrast material. Gadolinium may be regularly/routinely used in applications such as, for example, MRI, at a dosage of 0.1-0.3 mmole/kg. Thus, an average weight adult subject may be administered with (dependant on the subject's weight) about 20-40 ml of a contrast material containing Gadolinium. Usually, the Gadolinium containing contrast material is not mixed or diluted with saline or other material, and it may be administered by any administration route. When administered by, for example, injection, injection rate may be 1-3 ml/sec and may be followed by a saline push of, for example, 20 ml. Gadolinium containing contrast material is not routinely used for applications such as CT. When rarely used for such applications, the dosage used may be up to 4 times higher than that used for an application such as MRI. However, high amounts of Gadolinium containing contrast material may impose health hazard to subjects administered with the material by causing severe side effects. According to some embodiments, contrast material containing Gadolinium may be used in applications such as CT, in a method and system in accordance with some embodiments. The Gadolinium material used according to some embodiments, may include Gadolinium containing contrast material at a dosage of about 0.001-0.25 mmole/kg. Preferably, Gadolinium containing contrast material may be used at a dosage of about 0.001-0.20 mmole/kg. More Preferably, Gadolinium containing contrast material may be used at a dosage of about 0.001-0.15 mmole/kg. More Preferably, Gadolinium containing contrast material may be used at a dosage of about 0.001-0.10 mmole/kg. Even more Preferably, Gadolinium containing contrast material may be used at a dosage of about 0.001-0.05 mmole/kg. Even more Preferably, Gadolinium containing contrast material may be used at a dosage of about 0.001-0.01 mmole/kg. The Gadolinium material used according to some embodiments may include administration of Gadolinium containing contrast material at an administration rate of about 0.01-2.5 ml/sec. Preferably, the Gadolinium material used according to some embodiments may include administration of Gadolinium containing contrast material at an administration rate of about 0.01-2 ml/sec. More Preferably, the Gadolinium material used according to some embodiments, may include administration of Gadolinium containing contrast material at an administration rate of about 0.01-1.5 ml/sec. Preferably, the Gadolinium material used according to some embodiments may include administration of Gadolinium containing contrast material at an administration rate of about 0.01-1 ml/sec. Even more preferably, the Gadolinium material used according to some embodiments may include administration of Gadolinium containing contrast material at an administration rate of about 0.01-0.5 ml/sec. Preferably, the Gadolinium material used according to some embodiments may include administration of Gadolinium containing contrast material at an administration rate of about 0.01-0.2 ml/sec. Even more preferably, the Gadolinium material used according to some embodiments may include administration of Gadolinium containing contrast material at an administration rate of about 0.01-1 ml/sec.

Lowering the percentage and/or volume and/or amount and/or administration rate of contrast material administered to a subject may lower the spatial and temporal detection levels of the contrast material and therefore to overcome this potential problem, enhancement and a method for enhancement of detection and tracing and/or accuracy of detection and tracing is provided, according to some embodiments.

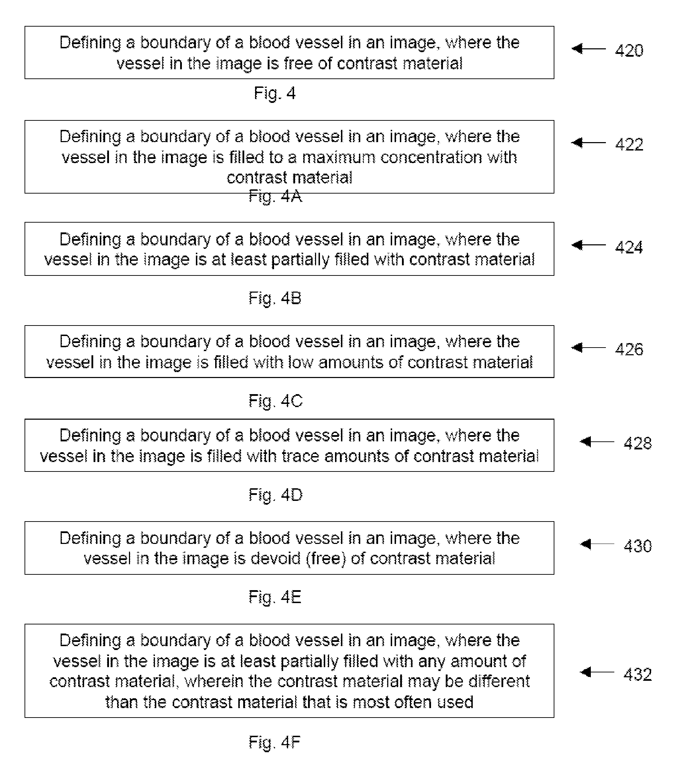

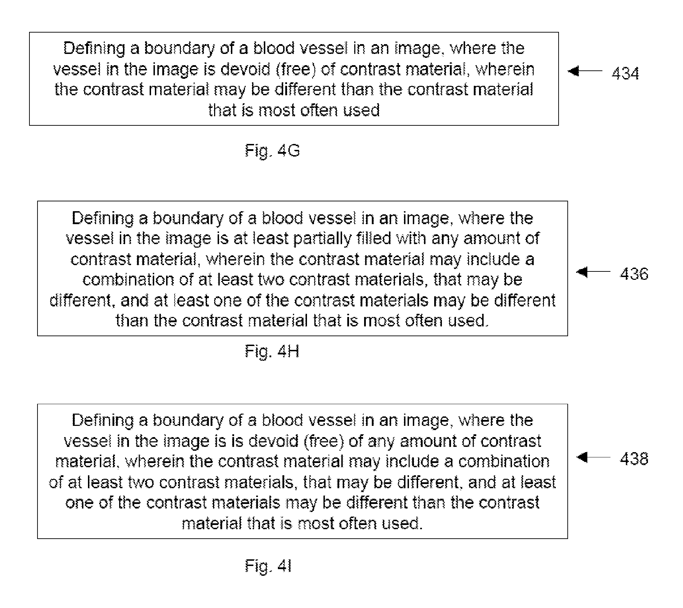

Reference is made to Fig. 4, a flow diagram of a method in accordance with an embodiment of the invention. In block 400, an image processor may define a boundary of a vessel or part of a vessel in an image or series of images, where the vessel in the image is not filled with contrast material. In some embodiments of the invention, an image processor may segment, trace, define, display, differentiate, identify, measure, characterize, make visible or otherwise define a vessel or part of a vessel that contains only a small amount of contrast material or is free of or not highlighted by contrast material. In some embodiments, an image processor may display or define one or more boundaries, edges, walls or characteristics such as diameter, thickness of a wall, position, slope, angle, or other data of or about an organ or vessel when such vessel is free of or not highlighted by contrast material. Other boundaries or characteristics of a vessel may be displayed or defined in for example an image or in other collections of data about the vessel. In some embodiments, an image processor may define or display a boundary of a vessel and a boundary of a blockage of such vessel, such that a diameter of the vessel with the blockage and without the blockage may be displayed or calculated.

According to some embodiments, and as exemplified in Fig. 4A, which illustrates a flow diagram of a method in accordance with some embodiments, in block 420, an image processor may define a boundary of a vessel or part of a vessel in an image or series of images, where the vessel in the image is filled with contrast material to a maximum concentration of contrast material. The image processor may segment, trace, define, display, differentiate, identify, measure, characterize, make visible or otherwise define a vessel or part of a vessel that contains contrast material. According to some embodiments, an image processor may display or define one or more boundaries, edges, walls or characteristics such as diameter, thickness of a wall, position, slope, angle, or other data of or about an organ or vessel when such vessel is filled with contrast material. Other boundaries or characteristics of a vessel may be displayed or defined in for example an image or in other collections of data about the vessel. In some embodiments, an image processor may define or display a boundary of a vessel and a boundary of a blockage of such vessel, such that a diameter of the vessel with the blockage and without the blockage may be displayed or calculated.

According to further embodiments, and as exemplified in Fig. 4B, which illustrates a flow diagram of a method in accordance with some embodiments, in block 422, an image processor may define a boundary of a vessel or part of a vessel in an image or series of images, where the vessel in the image is at least partially filled with contrast material. The image processor may segment, trace, define, display, differentiate, identify, measure, characterize, make visible or otherwise define a vessel or part of a vessel that at least partially contains contrast material. According to some embodiments, an image processor may display or define one or more boundaries, edges, walls or characteristics such as diameter, thickness of a wall, position, slope, angle, or other data of or about an organ or vessel when such vessel is at least partially filled with contrast material. Other boundaries or characteristics of a vessel may be displayed or defined in for example an image or in other collections of data about the vessel. In some embodiments, an image processor may define or display a boundary of a vessel and a boundary of a blockage of such vessel, such that a diameter of the vessel with the blockage and without the blockage may be displayed or calculated.

According to some embodiments, and as exemplified in Fig. 4C, which illustrates a flow diagram of a method in accordance with some embodiments, in block 424, an image processor may define a boundary of a vessel or part of a vessel in an image or series of images, where the vessel in the image is filled with low amounts of contrast material. The image processor may segment, trace, define, display, differentiate, identify, measure, characterize, make visible or otherwise define a vessel or part of a vessel that contains low amounts of contrast material. According to some embodiments, an image processor may display or define one or more boundaries, edges, walls or characteristics such as diameter, thickness of a wall, position, slope, angle, or other data of or about an organ or vessel when such vessel is filled with low amounts of contrast material. Other boundaries or characteristics of a vessel may be displayed or defined in for example an image or in other collections of data about the vessel. In some embodiments, an image processor may define or display a boundary of a vessel and a boundary of a blockage of such vessel, such that a diameter of the vessel with the blockage and without the blockage may be displayed or calculated.

According to some embodiments, and as exemplified in Fig. 4D, which illustrates a flow diagram of a method in accordance with some embodiments, in block 426, an image processor may define a boundary of a vessel or part of a vessel in an image or series of images, where the vessel in the image is filled with only trace amounts of contrast material. The image processor may segment, trace, define, display, differentiate, identify, measure, characterize, make visible or otherwise define a vessel or part of a vessel that contains only trace amounts of contrast material. According to some embodiments, an image processor may display or define one or more boundaries, edges, walls or characteristics such as diameter, thickness of a wall, position, slope, angle, or other data of or about an organ or vessel when such vessel is filled with only trace amounts of contrast material. Other boundaries or characteristics of a vessel may be displayed or defined in for example an image or in other collections of data about the vessel. In some embodiments, an image processor may define or display a boundary of a vessel and a boundary of a blockage of such vessel, such that a diameter of the vessel with the blockage and without the blockage may be displayed or calculated.

According to some embodiments, and as exemplified in Fig. 4E, which illustrates a flow diagram of a method in accordance with some embodiments, in block 428, an image processor may define a boundary of a vessel or part of a vessel in an image or series of images, where the vessel in the image is devoid (free) of contrast material. The image processor may segment, trace, define, display, differentiate, identify, measure, characterize, make visible or otherwise define a vessel or part of a vessel that is devoid (free) of contrast material. According to some embodiments, an image processor may display or define one or more boundaries, edges, walls or characteristics such as diameter, thickness of a wall, position, slope, angle, or other data of or about an organ or vessel when such vessel is devoid (free) of contrast material. Other boundaries or characteristics of a vessel may be displayed or defined in for example an image or in other collections of data about the vessel. In some embodiments, an image processor may define or display a boundary of a vessel and a boundary of a blockage of such vessel, such that a diameter of the vessel with the blockage and without the blockage may be displayed or calculated.

According to some embodiments, and as exemplified in Fig. 4F, which illustrates a flow diagram of a method in accordance with some embodiments, in block 430, an image processor may define a boundary of a vessel or part of a vessel in an image or series of images, where the vessel in the image is at least partially filled with any amount of contrast material, wherein the contrast material may be different than the contrast material that is most often used. For example, contrast material, such as Gadolinium that is usually used for applications such as MRI, may be used, in accordance with some embodiments, in application such as CT. The image processor may segment, trace, define, display, differentiate, identify, measure, characterize, make visible or otherwise define a vessel or part of a vessel that is at least partially filled with any amount of contrast material, wherein the contrast material may be different than the contrast material that is most often used. According to some embodiments, an image processor may display or define one or more boundaries, edges, walls or characteristics such as diameter, thickness of a wall, position, slope, angle, or other data of or about an organ or vessel when such vessel is at least partially filled with any amount of contrast material, wherein the contrast material may be different than the contrast material that is most often used. Other boundaries or characteristics of a vessel may be displayed or defined in for example an image or in other collections of data about the vessel. In some embodiments, an image processor may define or display a boundary of a vessel and a boundary of a blockage of such vessel, such that a diameter of the vessel with the blockage and without the blockage may be displayed or calculated.

According to some embodiments, and as exemplified in Fig. 4G, which illustrates a flow diagram of a method in accordance with some embodiments, in block 432, an image processor may define a boundary of a vessel or part of a vessel in an image or series of images, where the vessel in the image is devoid (free) of contrast material, wherein the contrast material may be different than the contrast material that is most often used. For example, contrast material, such as Gadolinium that is usually used for applications such as MRI, may be used, in accordance with some embodiments, in application such as CT. The image processor may segment, trace, define, display, differentiate, identify, measure, characterize, make visible or otherwise define a vessel or part of a vessel that is devoid (free) of contrast material, wherein the contrast material may be different than the contrast material that is most often used. According to some embodiments, an image processor may display or define one or more boundaries, edges, walls or characteristics such as diameter, thickness of a wall, position, slope, angle, or other data of or about an organ or vessel when such vessel is devoid (free) of contrast material, wherein the contrast material may be different than the contrast material that is most often used. Other boundaries or characteristics of a vessel may be displayed or defined in for example an image or in other collections of data about the vessel. In some embodiments, an image processor may define or display a boundary of a vessel and a boundary of a blockage of such vessel, such that a diameter of the vessel with the blockage and without the blockage may be displayed or calculated.

According to some embodiments, and as exemplified in Fig. 4H, which illustrates a flow diagram of a method in accordance with some embodiments, in block 434, an image processor may define a boundary of a vessel or part of a vessel in an image or series of images, where the vessel in the image is at least partially filled with any amount of contrast material, wherein the contrast material may include a combination of at least two contrast materials, that may be different, and at least one of the contrast materials may be different than the contrast material that is most often used. As a non limiting example, a combination of contrast materials may include such materials as, various forms of Iodine, Gadolinium, microbubble agent, and any appropriate contrast material. Such combination may be used, for example in applications such as MRI (wherein Gadolinium is used more often) and/or CT (wherein Gadolinium is used more rarely). The image processor may segment, trace, define, display, differentiate, identify, measure, characterize, make visible or otherwise define a vessel or part of a vessel that is at least partially filled with any amount of contrast material, at least partially filled with any amount of contrast material, wherein the contrast material may include a combination of at least two contrast materials, that may be different, and at least one of the contrast materials may be different than the contrast material that is most often used. According to some embodiments, an image processor may display or define one or more boundaries, edges, walls or characteristics such as diameter, thickness of a wall, position, slope, angle, or other data of or about an organ or vessel when such vessel is at least partially filled with any amount of contrast material, wherein the contrast material may include a combination of at least two contrast materials, that may be different, and at least one of the contrast materials may be different than the contrast material that is most often used. Other boundaries or characteristics of a vessel may be displayed or defined in for example an image or in other collections of data about the vessel. In some embodiments, an image processor may define or display a boundary of a vessel and a boundary of a blockage of such vessel, such that a diameter of the vessel with the blockage and without the blockage may be displayed or calculated.

According to further embodiments, and as exemplified in Fig. 4I, which illustrates a flow diagram of a method in accordance with some embodiments, in block 436, an image processor may define a boundary of a vessel or part of a vessel in an image or series of images, where the vessel in the image is devoid (free) of any amount of contrast material, wherein the contrast material may include a combination of at least two contrast materials, that may be different, and at least one of the contrast materials may be different than the contrast material that is most often used. As a non limiting example, a combination of contrast materials may include such materials as, various forms of Iodine, Gadolinium, microbubble agent, and any appropriate contrast material. Such combination may be used, for example in applications such as MRI (wherein Gadolinium is used more often) and/or CT (wherein Gadolinium is used more rarely). The image processor may segment, trace, define, display, differentiate, identify, measure, characterize, make visible or otherwise define a vessel or part of a vessel that is devoid (free) of any amount of contrast material, at least partially filled with any amount of contrast material, wherein the contrast material may include a combination of at least two contrast materials, that may be different, and at least one of the contrast materials may be different than the contrast material that is most often used. According to some embodiments, an image processor may display or define one or more boundaries, edges, walls or characteristics such as diameter, thickness of a wall, position, slope, angle, or other data of or about an organ or vessel when such vessel is devoid (free) of any amount of contrast material, wherein the contrast material may include a combination of at least two contrast materials, that may be different, and at least one of the contrast materials may be different than the contrast material that is most often used. Other boundaries or characteristics of a vessel may be displayed or defined in for example an image or in other collections of data about the vessel. In some embodiments, an image processor may define or display a boundary of a vessel and a boundary of a blockage of such vessel, such that a diameter of the vessel with the blockage and without the blockage may be displayed or calculated.

In operation, an image processor in an embodiment of the invention may map, depict or segment an organ or vessel in an image by clustering pixels in an area of interest of an image into a number of clusters of image intensity levels. The range of image intensity levels of pixels that may be included in a cluster may include variably or unevenly sized ranges of image intensities, such that the ranges of intensity levels in a cluster are non-uniform. In some embodiments, numerous clusters of pixels in a range of image intensity levels may be created in the levels that generally appear in images of soft tissue, while other kinds of tissue may be represented by fewer clusters. In some embodiments, certain of the clusters may be disregarded in an image as not being part of or related to the target organ or vessel. Prior to removing or disregarding clusters, some pixels that were not mapped to these clusters may in some embodiments be added, in for example a bottom hat operation. In some embodiments, adding such pixels may be accomplished by transforming the pixels in the cluster that would otherwise have been disregarded into an image, and applying a closing operation or another morphological operation to such image. The added pixels may then be disregarded along with the pixels in a cluster that is disregarded. Other processes may be used.

In some embodiments, certain clusters of pixels may be mapped into regions of isolable contour levels, where a mapped region shows an area of a cluster of pixels having a given range of image intensities. In some embodiments, the isolable contour region that has a range of image intensity levels which is the same as or similar to the range of image intensity levels of a seed area, and /or whose area overlaps or may be in contact with a seed area of for example a prior image, may be identified as including the target vessel. In some embodiments, an area selected as including the target vessel in an image may be designated as a seed area in a succeeding image.

In some embodiments, a selection of one among a plurality of possible isolable contours regions that may define or enhance the accuracy of one or more boundaries of a target vessel, may be made by for example comparing geometric characteristics of a view of for example a target vessel or other area as it is presented in for example two or more isolable contour regions. In some embodiments, the accuracy of the selection of an isolable contour region that defines a boundary of a target vessel may also be checked through texture analysis of a target vessel as the vessel is presented in various images having areas of interests of different sizes. In some embodiments, the sharpness or definition or accuracy of definition of a target vessel or organ identified in a segmentation may be checked, optimized or improved by first standardizing the size or number of pixels in a particular area of interest of an image, such as for example a seed area by for example standardizing the entropy figure by diving the entropy figure by a log of the number of pixels in the area whose entropy is measured, and comparing the standardized entropy of an area of interest in a first image to a standardized entropy in an area of interest of another image.

In some embodiments, more than one target vessel or organ may be serially or concurrently segmented in an image or series of images, and a processor may recursively segment the selected vessels beginning at the various seed points, as such points may have been indicated by for example a user in a first or successive image. In some embodiments, a memory may record the seed points and the vessels and branches that may extend from such points.

In some embodiments, data and coordinates of a location, plane, orientation and dimensions of a target vessel may be stored as x, y, z binary 3D volume data, where a 3D matrix indicates pixels belonging to the segmented vessel. The result matrix may be further processed, for instance by morphological operations such as the deletion of elements below a certain predefined number of pixels or the filling of holes in a segmented slice by applying a flood-fill operation on a set of background pixels unreachable from the edges of the vessel slice.

According to some embodiments, as described herein, there is provided a method and system that allows for enhanced spatial and temporal detection and/or tracing of contrast material. For example, after about 20 seconds from administration (for example by injection into blood circulation) to a subject, contrast material may be traced in arteries. After about 80 seconds from administration, contrast material may be traced in soft and hard tissues as well as in veins. After about 200 seconds, contrast material may be traced in various organs, such as paired organs (such as kidneys and lungs), organs with systemic blood flow (such as liver), and the like. The spatial and temporal detection and/or tracing of contrast material in a method and system in accordance with some embodiments may provide an image with enhanced image quality, such that images produced at time points later than 20 seconds from administration exhibit image qualities compared to image quality obtained after 20 seconds from administration. The spatial and temporal detection and/or tracing of contrast material in a method and system in accordance with some embodiments may produce image with enhanced quality and may thus further provide health care providers an improved diagnostic and clinical tool.

Analysis of the spatial and temporal tracing of the contrast material, according to some embodiments, may be used for various diagnostic and clinical purposes. For example, the tracing of the contrast material at a time of about 200 seconds from administration may be used to determine and analyze systemic blood flow and thus identify organs that exhibit abnormal (that may be high or low) blood flow and/or blood supply, which may be indicative of a pathologic condition. According to some exemplary embodiments, blood flow/blood supply in paired organs, such as kidneys may be compared between two kidneys in a subject. For example, if within one of the kidneys, a contrast material is traced, in a method and system according to some embodiments, the localization and scattering pattern of the contrast material may further be analyzed. If the scattering pattern of the contrast material is even throughout the kidney, then most likely that the kidney is functioning properly and blood vessels of the kidney are not blocked. If the scattering pattern of the contrast material is localized to certain regions of the kidney and not evenly scattered, then most probably blood supply in the kidney is impaired. Further detailed analysis of regions in the kidney wherein no contrast material is traced, may be performed to identify those regions that have an impaired blood supply. Referring to the second kidney, if for example, no contrast material is traced in the kidney, then most probably, blood supply/blood flow to the kidney is impaired. This situation may indicate, for example that the kidney artery is blocked, and may further indicate of a necrotic kidney. Such an exemplary analysis may be used to differentiate, for example, between an unblocked artery (open artery), partially blocked artery (at level, of, for example, 95% blockage) and a completely blocked artery (100% blockage). The spatial and temporal detection, and/or tracing of contrast material in a method and system in accordance with some embodiments may provide an image with enhanced quality, such that image produced at a time point of, for example, about 200 seconds from administration, exhibit image quality that may be compared to image quality obtained after 20 seconds from administration. For example, referring to the example of detecting/tracing blood flow/blood supply in kidneys detailed above herein, enhancing image quality of images obtained after 200 seconds by a method and system in accordance with some embodiments, may exhibit image quality as if the image was obtained after 20 seconds from administration. This may mean that structures, such as kidneys and infrastructures in the kidneys, such as for example blood vessels of the kidneys, may be exhibited in an image with enhanced quality in a clear, distinguishable, distinct manner, as if the image was obtained after 20 seconds from administration and not after 200 seconds from administration Hence, images with enhanced quality, obtained in a method and system in accordance with some embodiments may provide health care providers with an improved diagnostic and clinical tool.

According to further exemplary embodiments, blood flow/blood supply in non paired organs, such as, for example, liver, may be analyzed by a method according to some embodiments, to identify abnormal pathological conditions. For example, tracing of the contrast material at a time of about 200 seconds from administration in a liver may indicate regions wherein blood flow may be abnormally low (for example, due to a localized blockage) or abnormally high, conditions that may be indicative of a pathologic condition. The spatial and temporal detection, and/or tracing of contrast material in a method and system in accordance with some embodiments may provide an image with enhanced quality, such that image produced at a time point of, for example, about 200 seconds from administration, exhibit image quality that may be compared to image quality obtained after 20 seconds from administration. For example, referring to the example of detecting/tracing blood flow/blood supply in liver detailed above herein, enhancing image quality of images obtained after 200 seconds by a method and system in accordance with some embodiments, may exhibit image quality as if the image was obtained after 20 seconds from administration. This may mean that structures, such as blood vessels in the liver may be exhibited in an image with enhanced quality in a clear, distinguishable, distinct manner, as if the image was obtained after 20 seconds from administration and not after 200 seconds from administration. Hence, images with enhanced quality, obtained in a method and system in accordance with some embodiments may provide health care providers with an improved diagnostic and clinical tool.

According to further exemplary embodiments, analyzing blood flow/blood supply in a method according to some embodiments may be used to detect organs and/or tissues abnormalities, such as for example, benign and/or malignant tumors. For example, tracing of the contrast material at a time of about 200 seconds from administration in a tissue, may indicate regions wherein blood flow may be abnormally low or abnormally high, conditions that may be indicative of the existence of tumors that may be benign or malignant. The spatial and temporal detection, and/or tracing of contrast material in a method and system in accordance with some embodiments may provide an image with enhanced quality, such that image produced at a time point of, for example, about 200 seconds from administration, exhibit image quality that may be compared to image quality obtained after 20 seconds from administration. For example, referring to the example of detecting organs and/or tissues abnormalities detailed above herein, enhancing image quality of images obtained after 200 seconds by a method and system in accordance with some embodiments, may exhibit image quality as if the image was obtained after 20 seconds from administration. This may mean that structures, such as blood vessels of and around the examined tissue, may be exhibited in an image with enhanced quality in a clear, distinguishable, distinct manner, as if the image was obtained after 20 seconds from administration and not after 200 seconds from administration. Hence, images with enhanced quality, obtained in a method and system in accordance with some embodiments may provide health care providers with an improved diagnostic and clinical tool.

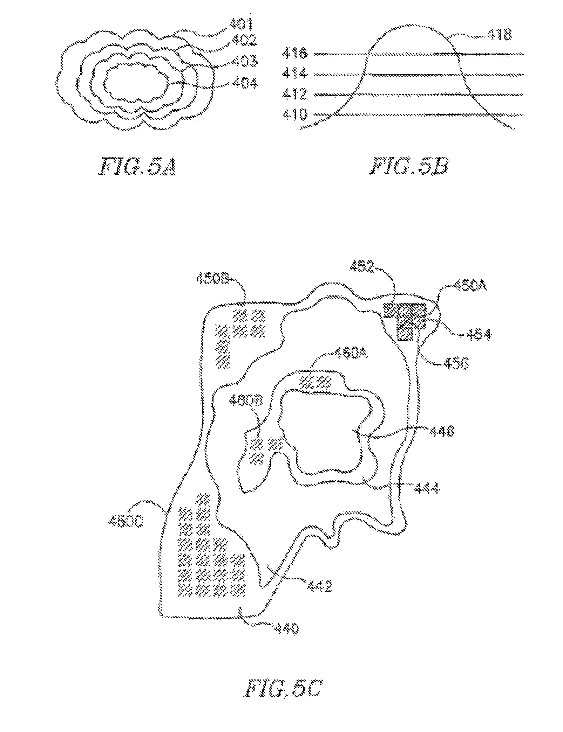

Reference is made to Fig. 5A, a schematic depiction of isolable contour regions defining areas of image intensities of pixels in accordance with an embodiment of the invention. In some embodiments, an isolable region 401 with a lowest level may define an area of pixels having an intensity level of at least for example -1000Hu. A another isolable contour region 402 may define an area that includes pixels having intensities of at least -100Hu, another intensity level may define an area with pixels having intensity levels of at least 0Hu, another isolable region may define an area having pixels with for example 60 Hu, another isolable region 403 may define an area having pixels with for example 300Hu, and another isolable region 404 may define an area having pixels with for example 800Hu. Not all isolable regions may be shown in Fig. 5A. In some embodiments, a boundary of a target vessel may be defined by the limits of one or more isolable contour regions. In some embodiments, a boundary of a target vessel may include data on a circumference, area and position of the target vessel.

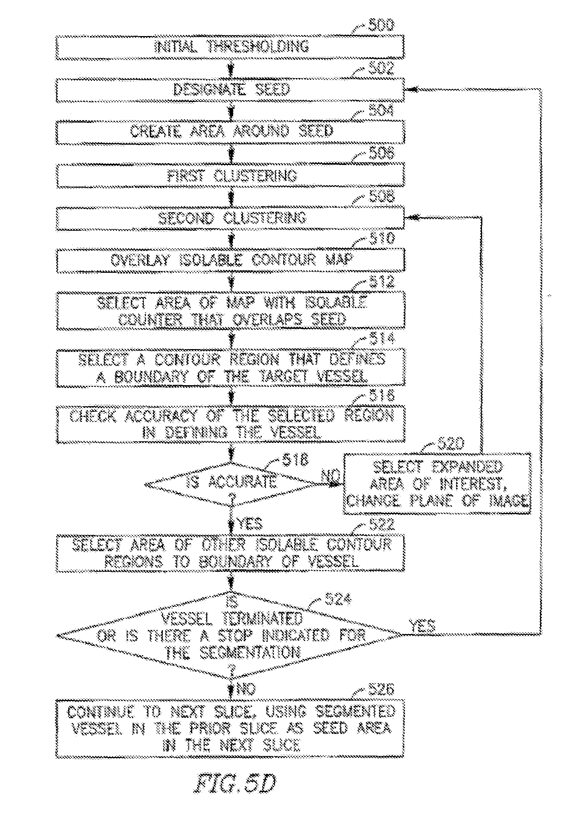

Reference is made to Fig. 5D, a flow diagram of a method of clustering pixels into ranges of intensity levels and mapping contour levels of the clustered pixels to segment a body part in an image in accordance with an embodiment of the invention. In block 500, and in some embodiments, an initial threshholding of an image or area of an image may highlight possible areas of interest or desired characteristics in possible areas of interest. For example, an initial threshholding may remove pixels or areas of pixels having image intensities of less than a defined Hu level. Such a defined level may approximate an image intensity level of pixels that correspond to for example areas of water or air or other items in an image that are not of interest to a particular segmentation exercise.

In some embodiments, the image used for designating an area of interest may be a first image in a series of images. In some embodiments a starting point in a segmentation in accordance with an embodiment of the invention may begin at a last or intermediate slice in a series of images and may proceed to a first, previous or later slice. In some embodiments, segmentation may proceed in both directions out from a particular starting slice. In some embodiments, a segmentation in an embodiment of the invention may move in a coronal, sagital or other plane of a body, organ, vessel or other structure. Other slices or images in a series of images or orders of segmentation of such images may be used. A direction, order, vector or plane of images may be altered in one or more processes of segmenting a vessel.

In some embodiments, an image intensity threshold for an initial threshholding may be designated by a user in for example an iterative process where a user may highlight a possible area of interest, and reject pixels below a threshold intensity level that approximates the intensity level of pixels of the target vessel. In some embodiments, an image intensity level for an initial threshholding may be designated by for example a processor, based on for example data about the organ or target vessel to be segmented. For example, a user may identify a vessel or structure by for example, name, region, thickness or other characteristics. A processor may reference a data base that may include for example historic samples of for example grayscale scorings of an identified vessel, shapes of an identified vessel or average image intensities of the identified vessels that are being targeted for segmentation. The processor may threshold intensities that are out of a range of such sampled or average intensity levels or may otherwise locate the target vessel in for example a first image.

A result of the initial threshholding may be a highlighting or designation of an area of interest that may include the target vessel or organ. Other methods may be used to select an area of interest in an image. In some embodiments an area of interest may be smaller than or may include fewer pixels than the entire area of the image. In some embodiments an entire area of an image may be designated as an area of interest.

In block 502 a seed point or seed area may be selected or designated in the area of interest of an image. In some embodiments a seed area may be co-extensive with an area of interest. In some embodiments, a user may select a seed point or seed area by way of pointing to or otherwise indicating the selected seed point or area with a pointing device that may for example be connected to a display. In some embodiments, a seed point may be selected automatically by for example a processor based on the input by for example a user of data on a target vessel to be segmented. Such data may be or include for example a name of a vessel or organ, a shape of the target vessel or organ, an expected image intensity of the target vessel or organ or other data. In some embodiments, a processor may reference a data base of, for example, sample image intensity data or shapes of a particular vessel or organ, and compare such historic data with the displayed image to locate and select the named vessel or organ. Other methods of selecting or designating a seed point target vessel in an image are possible.

A seed point may be or include one or more pixels within the seed area. For example, a processor may select a seed point as a mass center of a region, or as a pixel with an image intensity value having a mean, median or average of the image intensities of pixels present in the specified area. In some embodiments, a user may select a seed point or area. Other methods of selecting a seed point or area are possible.

In some embodiments, coordinates of the seed point may be recorded. Such coordinates may include for example horizontal (x) and vertical (y) coordinates in the image of one or more pixels in the seed point, a slice or image number of the image in the series of images (z) and an image intensity (v) or average, median mean or other intensity characteristic of one or more pixels in or around the seed point.

In some embodiments, coordinates of for example a seed point may include data regarding a plane upon which sits the image wherein the seed was identified Other coordinates or characteristics of a seed point or seed area may be recorded or stored.

In some embodiments one or more seed points may be selected within an image, and a processor may serially, recursively or consecutively segment one or more target vessels in such image. Other methods or orders of segmenting multiple seeds or branch list stacks are possible.

In block 504, and in some embodiments, a seed area may be selected or designated around for example a seed point. In some embodiments, dimensions of an area of interest may be selected to create for example a bounding box, a convex hole or other shapes around a seed point or group of pixels surrounding a seed point. Other shapes may be used to surround or designate a seed area or area of interest. In some embodiments, for example a radii, diagonal or other measure of a bounding box, convex hole, circle or other shape around a seed area or seed point may be multiplied, divided or otherwise changed by for example a factor of two, three or some other factor to approximate the likely areas wherein the target vessel may be found in the image or in a subsequent image in the series of images. Other factors or processes for creating an area of interest may be used such as for example log or others.

Refining or adjusting the size, shape or location of an area of interest may improve the likelihood that the area of interest includes the likely dimensions of the target vessel without encompassing unnecessary additional areas. An area of interest that is too large may include too may gray-scale levels which may reduce the effectiveness of clustering. An area of interest that is too small may not include the boundaries of a target vessel being segmented.

In block 506, and in some embodiments, a first clustering of pixels in the area of interest may be performed. In some embodiments a first clustering may designate for example four or several image intensity levels (N1) as for example cluster center means, and may create several clusters of pixels around such centers. In some embodiments, the clusters corresponding to a lowest image intensity level that may correspond to imaged items that are not of interest, such as air and water, may be excluded from further clustering.

In block 508 and in some embodiments, a second clustering may be performed on the pixels that are in the intensity levels that were not excluded in the first clustering. In such clustering, a larger or much larger number of image intensity levels (N2) may be selected as cluster centers, such as 6, 10 or even more. In some embodiments, the number of clusters that may be selected may be a function of the processing power and time that may be available to complete a clustering process. Other functions for determining a number of clusters are possible.

A second clustering may separate pixels into a large number of clusters based on relatively small differences in the image intensity of such pixels. For example, a user may instruct a processor to create 15 clusters that may include varying sized ranges of intensity levels. In some embodiments, a processor may automatically select one or more clusters center means, and the range of one or more of clusters to be created around such centers, based on for example an intensity of a seed point or an average intensity of a seed area. For example if an intensity level of a seed point is high, a set of cluster center means may be selected in a relatively high range on a pixel intensity scale. If an intensity level of a seed point or seed area is relatively low, a different set of possible cluster center means in for example a lower area or range of the intensity scale may be chosen. Other criteria may be used to select a number of clusters and a set of cluster center means. In some embodiments, pixels may be clustered by characteristics other than their image intensity levels, or by a combination of image intensity levels and other characteristics.

In some embodiments, the range of intensity units in a cluster may be variable or non-uniform, such that the intensity levels may be un-evenly spaced along the range of possible intensity units that may be relevant to an area of interest.

In some embodiments, a user or a processor may select the cluster center means of one or more clusters. Selection of a cluster center mean with for example an image intensity that is present in for example a target vessel may facilitate differentiating a target vessel from surrounding structures. In some embodiments, several possible groups or sets of cluster centers may be defined by for example a processor, one for example for normal contrast intensities, and a second for low contrast intensities. A set of possible cluster center means may be assembled by a user or selected from a pre-defined list. In some embodiments, one or more cluster center means may be selected based on a range of image intensities in a seed area, such that the cluster center means is similar to the range of image intensity levels in the seed area.

In some embodiments, an increase in the number of ranges of intensity levels that may be selected and in the number of clusters that are created, may increase the differentiation that is possible of pixels that have relatively similar image intensities. For example, increasing the number of clusters and, for example, setting one or more cluster center means to the image intensity level of a vessel wall, and another cluster center to the image intensity level of for example a blockage, plaque or other material that may adhere to or extend from a vessel wall, may highlight differences between an inner wall of a vessel and a blockage near such wall. In some embodiments, the number of intensity units that are included in a range of intensity levels used for clustering may be variable or different than the number of intensity units included in another level, such that the intensity levels may be un-evenly spaced along the range of intensity units in the area of interest.

In some embodiments, clustering may include a fuzzy c-means clustering process. In some embodiments clustering may include a k-means clustering. Other methods of clustering are possible.

In some embodiments, where for example, two or more cluster areas of similar image intensities appear in an image, a cluster area may be selected as the probable target vessel based on for example a distance of the cluster area from the seed area in for example a prior image. For example, where in an image there appear two or more cluster areas having a same or similar cluster center means, the area that is closest to a seed area of a prior image may be selected as the most likely target vessel. Other processes for selecting a probable cluster as representing a target vessel are possible such as multiplying, for example and several methods of calculating a distance transform may be applied, for example a Euclidean distance transform.

In block 510, an isolable contour map may be overlaid on the image so that the contours correspond to the location of the various clusters of the pixels in the area of interest on the image. Reference is made to Fig 5A, which depicts a conceptual representation of isolable contours overlaid over a group of pixels. In some embodiments a contour level may surround pixels in an area, where the encompassed pixels have image intensities of at least a certain level (Hu1). Another contour level may encompass pixels in for example a smaller area within the prior level, where such pixels have image intensities of at least a certain level (Hu2), where Hu2>Hu1. A next contour level may sit within the prior contour level, and may encompass pixels in a still smaller area where the encompassed pixels have image intensities of at least a certain level (Hu3), (Hu3>Hu2>Hu1). A highest contour level may encompass pixels in an area where the encompassed pixels have image intensities of for example a highest level in the relevant area. The resulting contour map may in some embodiments not contain empty matrices or contour levels that display higher image intensities than those that are present in the relevant area of the image. Fig. 5B is a conceptual depiction of a side view of mapped isolable contour regions, where lines 410, 412, 414 and 416 represent for example end points of image intensity ranges that may be included in a cluster and curve 418 represents the encompassed area of the mapped isolable contour areas of a target vessel. Other designations or measures of intensity levels are possible.

In some embodiments a color or other marking may be assigned to a contour level and such color may appear on a display of an image in the area of the contour. In some embodiments, various colors or other display characteristics may be assigned to each contour that is displayed.

In block 512, there may selected an area of the overlaid map that has a contour level region of image intensities that for example matches an intensity level of a seed point or seed area and, that for example includes or overlaps at least one pixel from a seed point or seed area. In some embodiments, there may be excluded contour areas whose range of pixel intensities may match the image intensity level of the contour that includes the seed point, but that do not have contact with or overlap the seed area in an image, or in a prior image. Such exclusion of non-overlapping contour areas may exclude from the further segmentation process images of for example other vessels in the area of interest that may have the same or similar image intensity levels as the target vessel but that are not the target vessel. For example, a contour map of an area of interest of an image may include two contour areas with image intensities that match the 60-300Hu level of the seed point in the image or in a prior image slice. In some embodiments, a processor or user may select for continued segmentation only the isolable contour level region with for example a matching intensity level and whose area overlaps or is otherwise in contact with the seed point of the image or of a prior image. This overlapping contour may likely include the target vessel in the image. In some embodiments, a selection of an overlapping contour may be achieved with an AND bitwise operator.

In block 514, and in some embodiments, a determination may be made of a contour level region that most closely defines a boundary of a target vessel. For example, and referring to Fig. 5A, the selection of contour 401 as presenting a view of a target vessel, may indicate a much wider vessel than a selection of contour level 404.

In some embodiments, an evaluation of the shape or other geometric properties of contour level regions may be used to determine a contour level that most closely defines a boundary of a target vessel. One such evaluation may include a comparison of shapes or other geometric properties of the areas of pixels encompassed by the various contour regions depicted on the overlaid map. Such a comparison may include calculating a minimum derivative of ΔAD, where ΔAD = ΔArea * Distance, where ΔArea is the change in the total area between two isolable contour regions in a clustered area of an image, and ΔDistance is the distance along the x and y axis between a center of mass of such two isolable contour regions. In some embodiments, contour region i+1 may be selected, where i is the contour region in respect of which ΔAD crosses the x axis to denote a zero change in ΔAD between the relevant contour regions. For example, and returning to Fig. 5A, if in a comparison of contour region 401 and contour region 402, ΔAD is zero, contour region 402 may be selected as defining a boundary of a target vessel. If there is more than one phase of ΔAD crossing the x axis, the first point in the second phase may be selected. Other methods of selecting a contour region that defines a boundary of a target vessel may be used.

In some embodiments, a texture analysis or comparison of entropy dimensions of areas of pixels encompassed by the various contour regions may be used to select a contour region that defines a boundary of a target vessel and / or to evaluate the accuracy or suitability of a contour level region that was selected as defining a boundary of a target vessel. A texture analysis using entropy dimensions may assume that the appearance in an image of pixels that are not part of a target vessel will have a higher entropy dimension (De) than a pre-defined threshold, and that the appearance of too few pixels will have a lower De than such threshold. A contour region may be varied and an entropy dimension of the image regarded as a fractal may be evaluated for one or more of the isolable contour regions. For example, if the intensity level of the cluster of the isolable contour region was too low, then too many pixels may be included in the region defining the target vessel, and a next higher contour level region may better define the boundaries of the vessel. If the intensity level was too high, then too few pixels may be included in such region, and a lower contour level region may be more appropriate for defining the vessel.

In some embodiments the two or more contour regions or areas of interests whose De is to be compared may have different areas and different number of pixels. A standardizing function, such as for example (De value - De minimum)/ (De maximum - De minimum) may standardize the De between the two regions so that the De values can be meaningfully compared. In some embodiments, a De of the compared regions may be standardized with the log of the number of pixels in each of the regions, as follows, Standardized De (SDe) = De / log(N), where N is the number of pixels in the part of the respective image whose De is being evaluated. In such case, SDe of a first image may be meaningfully compared to SDe of a second image or to a threshold level. In some embodiments a threshold range for SDe may be from 0.17 to 0.05, such that if a comparison of areas of interest or isolable regions yields an SDE within such range, the contour region or area of interest with the higher image intensity level may be selected as defining the target vessel or including the target vessel. In some embodiments, the region or area of interest selected may be the one with the lowest SDe value or the one with the closest value of SDe to a predefined value. Other threshold ranges may be used, and other methods of selecting an isolable contour region or area of interest may be used.

In some cases, an SDe of a contour region having even a lowest image intensity range of clustered pixels may be out of an acceptable SDe range. Such result may be caused by for example, the target vessel filling or taking up the entire area of interest that had been clustered, or by the disappearance of the target vessel from the particular image. To determine whether a target vessel takes up the entire area of interest, a method of an embodiment of the invention may repeat a clustering process on an expanded or enlarged area, such as for example a double sized area of interest so that for example pixels in the area of interest include the target vessel and at least some other surrounding area can be captured, and a boundary of the target area may be identified.

In some embodiments, if an SDe of even a lowest contour region is out of an acceptable SDe range, an algorithm such as the ΔAD calculation described in block 514, may be used to determine if a target vessel has been for example lost in an image, or if the target vessel takes up an entire area of interest. In an embodiment of the invention, pixel coordinates from a seed area of the image or of a prior image may be added or superimposed as a contour level onto the lowest or other contour region, such as, and referring to Fig. 5A, region 401. The ΔAD algorithm described in block 514 may be executed to compare the contour region with the added contour region of the pixel from the seed area as against the contour region without the added seed area contour region. If the ΔAD algorithm points to the region with the pixel from the seed area, by for exampling returning a lowest derivative for such region, an indication may be deduced that the target vessel has been lost or otherwise does not appear in the contour region and in the area of interest that was clustered. If the ΔAD calculation points to the contour region without the seed point, that may be an indication that the target vessel is in the contour region but that it takes up the entire area of interest.

In block 518 a determination may be made as to whether the segmentation is accurate, such as whether the target vessel has been lost or has failed to appear in, or has been terminated before, a predicted slice. For example, in some cases, a target vessel may not appear in a slice in which it may have been predicted to exist. In some cases such a prediction may be input by a user or may dictated by stored anatomical data for a particular region or vessel. If the segmentation is determined to be inaccurate, by for example a loss of a target vessel in an image, the method may continue to block 520. If the segmentation was deemed satisfactory, such that the target vessel is defined in the image, the method may proceed to block 522.

In block 520, a method of the invention may re-attempt segmentation of the target vessel by returning to a prior slice or image, and re-running the segmentation process described in for example block 508 using a larger area of interest than was used in the previous segmentation attempt. Other methods may be used to find a target vessel that does not appear in a predicted slice.

In some embodiments, the slice at which a second attempted segmentation may be initiated to, for example, find a predicted but not-visible target vessel, may be the slice that immediately preceded the slice wherein the target vessel disappeared. In some embodiments, the prior slice to which the method returns in the repeated segmentation attempt may be two, three or more slices before the slice wherein the target vessel disappeared or wherein the segmentation failed. In some embodiments, if the repeated attempt at segmentation fails to reveal the disappearing target vessel in the later slice, a further segmentation attempt may be initiated with a starting slice that precedes the starting slice in the prior attempt by two or more slices. In some embodiments the earlier slice used to locate a target vessel that disappeared in a current slice, may be a slice or image between the starting slice of segmentation and the slice where the target was lost. In some embodiments, a slice may be selected that is for example three slices prior to the slice where the target was lost. Other increments may be used for re-tracing a lost or disappearing target in prior slices. Earlier and earlier slices may be selected as a starting point for re-attempted segmentations until the lost target is reacquired.

In some embodiments, a disappearance in a current slice of a target vessel, or an SDe outside a pre-defined range may indicate that the vessel has been for example clogged. In block 520, and in some embodiments the method of an embodiment of the invention may re-attempt the segmentation process at a prior or other slice that may be perpendicular or differently angled or on a different plane than the current or prior slice.

In some embodiments, a failure of a segmentation attempt, as may be indicated by for example a disappearance in a current slice of a target vessel or by an SDe outside a pre-defined range, may in some cases be a result of for example a vessel or target structure passing near a high intensity structure such as a bone or larger contrast filled vessel, such that the clustering process did not adequately distinguish between the boundary of a target vessel and the other structure. In such case, an alternative segmentation process may be attempted to extract a region that includes the target vessel from the surrounding or contiguous structures. In an embodiment, such a segmentation process may include construction of a contour gradient map of an image, where such map may be based for example on image intensities of for example several areas in the image. A watershedding process may be executed on the gradients in the constructed map. Following the watershedding process, a seed point may be identified in a section of the image and the clustering process described in blocks 506 and 508, may be repeated on the region that was defined in the watershedding process and that includes the seed point or seed area.

In some cases, a boundary of for example a target vessel may not be apparent even in for example a region that includes the cluster of the low intensity pixels. Furthermore, in some cases, an edge of a target vessel may extend into a part of a lower contour region whose area may not have otherwise been selected for purposes of defining the boundary of the target vessel. In some cases, a vessel or boundary of a vessel may be defined in a segment or part of a contour region that does not include the entire contour region.

In block 522, and further referring to Fig. 5C, a depiction of isolable contour regions in accordance with an embodiment of the invention, a processor may isolate an area bounded by for example two consecutive isolable contour regions, such as for example the area between the edge of region 440 and the edge of region 442. In some embodiments, such area may be designated as the 442-440 region. Pixels in this 442-440 region may be grouped into for example neighborhoods 450, such as for example 8 neighboring pixels or 4 neighboring pixels, based on for example the existence of a shared side 452 between two contiguous pixels such as for example 454 and 456, subject to for example a condition that such two pixels are fully contained with the 442-440 region. In some embodiments, a neighborhood or a set of neighborhoods may include pixels in the 442-440 region that are linked by common or shared sides 452 between contiguous pixels. Each such continuous link or group may constitute a neighborhood 450. In some embodiments neighborhood 450 may include for example pixels that are surrounded for example on all sides by other pixels in the relevant region or that are surrounded by pixels in a region on for example at least two or three sides. Other criteria for inclusion in a neighborhood may be used.

In some embodiments an algorithm that may compare geometric properties of regions, such as for example the ΔA= ΔArea * ΔDistance algorithm described in block 514, may compare a region such as for example the 442-440 region, with a second region that may include that same 442-440 region plus one or more of the neighborhoods such as neighborhood 450A, 450B, and 450C. A result of the function ΔAD {442, 442+A} may be used to determine whether the 450A neighborhood is to be combined with region 442 and considered as defining a boundary of a target vessel. If for example a minimum derivative of ΔAD {442, 402+A} is lower than ΔAD {442} or is lower than for example a pre-defined level, the 450A neighborhood may be included in the boundaries of a target vessel whose boundaries may have otherwise been defined by the edge of region 442. In some embodiments an algorithm that compares geometric properties of regions, such as for example the ΔA= ΔArea * Distance algorithm, may compare neighborhoods such as 460A and 460B in areas between the edges of other contour regions such as 446-444 to determine if such other neighborhoods 460A and 460B are to be included in a boundary of a target vessel that is defined by an edge of such contour region 446. In some embodiments, a determination may be made as to the inclusion of pixels or areas that include pixels in a boundary of a target vessel, on the basis of for example proximity or contiguousness of such pixels to a region or to other pixels, rather than on an image intensity of such pixels.

In block 522 a determination may be made as to whether a target vessel is predicted to have terminated at the slice whose segmentation has been completed. If the target vessel has terminated, or if for example a user has marked the point on the vessel as a point to stop a segmentation, the method may return to for example block 502 where another vessel or seed of a vessel may be selected for segmentation beginning in for example a prior or other slice. If the target vessel has not terminated, the method may continue to block 526.

In block 526, and in some embodiments, a location of a target vessel that is found in an image may be deemed to be or used as the seed area for the segmentation of a next image in the segmentation process, and the segmentation method may be run on the next image or slice. In some embodiments, a segmentation process may end when all of the seeds in all of slices have been subject to a method of segmentation in an embodiment of the invention.

In some embodiments, two or more seed areas may be designated in a single image or slice where for example there is a branch of a target vessel into for example two or more branches. In some embodiments, a method of the invention may segment one or more of such branches, serially or concurrently, and may segment the root and each of the branches. In some embodiments, a plane of the progress of slices may be altered or and the series of images may be segmented in reverse to collect or add missed information that was not segmented in the initial direction or plane.

In some embodiments, a user may indicate that a particular target vessel or branch is not to be segmented beyond a certain distance or beyond a designated point or slice. For example, a user may designate a major vessel as a seed, and may indicate that only certain of the branches of the vessel are to be segmented. An embodiment of a method of the invention may stop the segmentation process of the indicated branches, and continue the segmentation of other branches that are of interest.

In some embodiments, segmentation data may be passed to a post-processing procedure which may for example apply dilation or erosion algorithms, or apply filters such as a Gaussian filter, smoothing filters or filters based on different convolution kernels. Such filters may enhance the display of the segmented data or may remove segmentation artifacts. Other post-processing or display enhancing methods are possible.

Furthermore, in some embodiments, filters may be applied in a preprocessing procedure to decrease noise that may be introduced to the images during the acquisition of these images by the 3D imager. Such smoothing and noise removal can be done by applying a Gaussian filter. Other methods of smoothing and or noise removal may be applied. In some embodiments, filters may be applied in a preprocessing procedure to decrease noise introduced to the images during the acquisition of these images by the 3d imager. Such smoothing and noise removal can be done by applying a Gaussian filter. Other methods of smoothing and or noise removal may be applied.

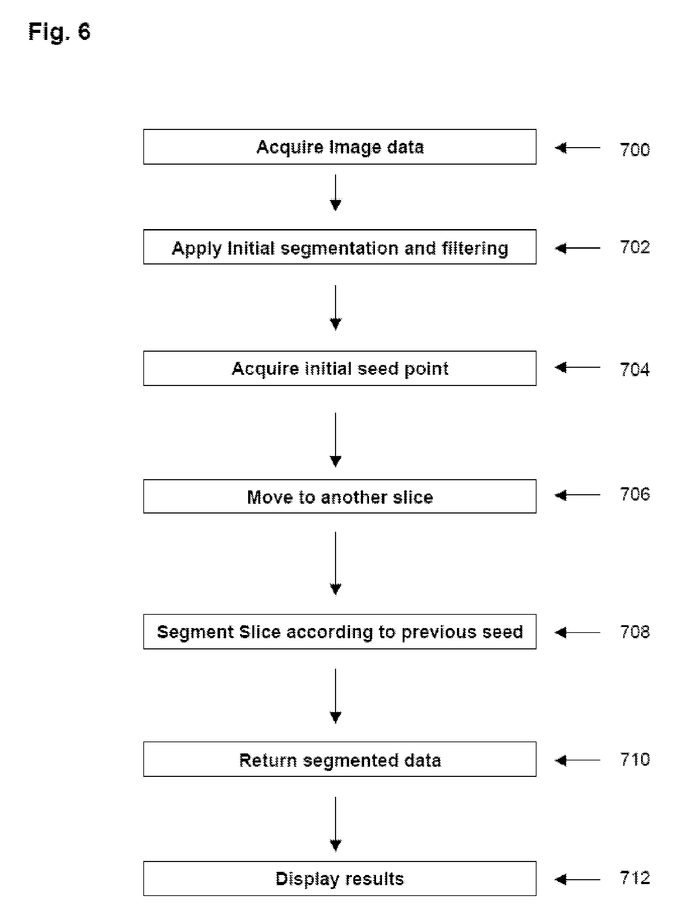

Reference is now made to Fig. 6, which illustrates a simplified flow diagram of a method of processing imaging data into segmented data in order to segment a body or part of a body, or any structure in an image in accordance with some embodiments. In block 700, image data may be acquired. Acquiring of image data may be performed, for example by a diagnostic imager, such as, but not limited to Computerized Tomography (CT) device, Magnetic Resonance (MR) device, Ultrasound (US) Scanner, Computerized Tomography Angiography (CTA), Magnetic Resonance Angiograph (MRA), Positron Emission Tomography (PET), PET/CT, 2D-Angiography, 3D-angiography, X-ray/MRI devices, and the like. Acquire may include for example, scan, obtain, capture, picture, and the like, one or more frames and/or images of, for example, a subject body (such as subject 60 in Fig. 1A) that may include, for example: part of a body, such as a limb; organ(s), such as internal organs, paired organs; tissue(s), such as a soft tissue, hard tissue; cells; body vessels, such as blood vessel, a tree of blood vessels, alimentary canal, urinary tract, reproductive tract, tubular vessels, receptacles and the like, and any combination thereof. Image data may include any type of data, such as for example, 3D volume data set, various forms of digital data, that may include, among others, pixels, location of pixels, coordinates of pixels, distribution of pixels, intensity of pixels, vectors of pixels, and the like. The acquired image data may be transferred to, for example, an electrical image processing device that may, as indicated in block 702, apply initial segmentation and filtering. Segmentation of image data may include for example, segmenting, dividing, slicing, sectioning and the like, at least part or portion of an acquired image data by various methods, such as use of various algorithms that may be used, for example in calculation, computing, analyzing, determining segments in the image data. Segmentation may be performed automatically and/or manually. Filtering, mentioned in block 720 may include any method that may be used to filter unwanted and/or unneeded data that may be present in the image data. Filtering may be performed by various methods, such as use of various algorithms, predetermined threshold levels, relative threshold levels and the like, and may be performed automatically or manually. Next, in block 704 initial seed point is acquired, by any of the methods described above herein. For example, a seed point may be determined as a referencing point, region, segment, area, and the like in an acquired image data set. The seed data may include a vector of a pixel, that may include, for example, coordinates of a pixel (for example, along axes x',y',z'). Seed point may be determined manually or automatically by various ways, such as for example: by analyzing image data based on prior knowledge, which may be based, for example on algorithms, such as texture analysis; by predicting a location of a seed based on anatomical prior knowledge; manual selection of a seed point and or seed area in an image data (such as for example a 3D representation of the data, a 2D image of at least a part in the 3D data matrix) by a user; or any combination thereof In box 706, another slice, which may include, for example, the next frame or image data in a volume data set may be analyzed, and segmented as described above, by using data of a seed of a previous slice (frame and/or image). In other words, this may mean, identifying a structure from a first frame segment and using image data correlated to the structure in processing a second frame segment. The progression to next slice (such as next frame, image data and the like) may be performed in any direction, such as for example from the seed point onwards, backwards or in both directions, in any axis (such as for example, x',y'z') available in the data set. For example, progression to next images in a data set, may be performed along the z' axis in correlation to axial plane or transverse acquisition of images. Likewise, progression to next image(s) in a data set, may be performed along the y' or x' axis, moving in coronal or sagital plane, respectively. The process performed between blocks 706 and 708 is continuously repeated until no more slices are available. The results of the segmentation process of each slice may be returned as indicated in block 710 and may be stored in a new data set, such as for example, a new 3D volume data set. The data set thus obtained may further be analyzed by various ways, such as for example morphological operation, that may include, among others, deletion of elements in an image below a certain predefined number of pixels, filling of gaps/holes in a segmented slice by applying fill operations (such as for example a flood fill operation) on a set of background pixels. The analyzed data of the various slices and segmented slices thus obtained may be further displayed, for review and/or analysis, as indicated in block 712. The analyzed data thus obtained may further undergo a post-processing procedure, that may include, for example, applying functions on the data set, such as morphological operation to enhance or smooth the data, for example by applying dilation and erosion algorithms; applying various filtering procedures, such as Gaussian filter, filters based on various convolution kernels; applying various smoothing operations, such as smoothing algorithms; and the like. The post processing procedures may be used to assist in the visualization and analyzing of the data obtained, by eliminating artifacts that may be caused by, for example, the segmentation process. Steps and procedures described herein may be performed by, for example an image processor that may be adapted to include, use and execute, any appropriate and/or suitable software, hardware and/or firmware.

Embodiments of the invention may be included as instruction such as for example software instructions on for example a computer readable medium such as for example an electronic data storage medium.

It will be appreciated by persons skilled in the art that embodiments of the invention are not limited by what has been particularly shown and described hereinabove. Rather the scope of at least one embodiment of the invention is defined by the claims below.

## Claims

1. A method of imaging living tissue comprising:
identifying a structure from a first frame segment;
using image data correlated to the structure in processing a second frame segment; and
processing the image data to enhance image quality such that images with an attenuation value below a threshold value result in recognizable images.

2. The method of claim 1, wherein said threshold value is lower than about 200 Hounsfield units (HU).

3. The method of claim 1 further comprising administration of contrast material, wherein said contrast material comprises: Iodine, radioactive isotope of Iodine, Gadolinium, micro-bubbles agent, or any combination thereof.

4. The method of claim 3, wherein said contrast material is administered by injection.

5. The method of claim 3, wherein said contrast material is administrated at an administration rate of 0.05ml-2ml/sec.

6. The method of claim 3, wherein said contrast material is administrated at a volume of 0.1-60 ml.

7. The method of claim 1, wherein said structure comprises: body, body part, organ, tissue, cell, arrangement of tissues, arrangement of cells, or any combination thereof.

8. The method of claim 1, wherein said structure comprises a blood vessel.

9. The method of claim 1, wherein said image data comprises: 3D volume data set, form of digital data, location of pixels, coordinates of pixels, distribution of pixels, intensity of pixels, vectors of pixels or any combination thereof.

10. A system for imaging living tissue comprising:
a scanning portion adapted to scan living tissue in frame segments; and
an image processing module adapted to identify a structure from a first frame segment and to use image data correlated to the structure in processing a second frame segment, to enhance image quality such that image with an attenuation value below a threshold value result in recognizable image.

11. The system of claim 10, wherein said threshold value is lower than about 200 Hounsfield units (HU).

12. The system of claim 10, wherein said scanning portion comprises: a Computerized Tomography (CT) device, a Magnetic Resonance Imaging (MRI) device an Ultrasound (US) Scanner, Computerized Tomography Angiography (CTA) device, Magnetic Resonance Angiograph (MRA) device, Positron Emission Tomography (PET) device, PET/CT device, 2D-Angiography device, 3D-angiography device, X-ray/MRI device or any combination thereof.

13. The system of claim 10, wherein said structure comprises: body, body part, organ, tissue, cell, arrangement of tissues, arrangement of cells, or any combination thereof.

14. The system of claim 10, wherein said structure comprises a blood vessel.

15. The system of claim 10, wherein said image data comprises: 3D volume data set, form of digital data, location of pixels, coordinates of pixels, distribution of pixels, intensity of pixels, vectors of pixels or any combination thereof.
